# EUROPEAN PATENT SPECIFICATION

(11) **EP 4 087 012 B1**
(45) Date of publication and mention of the grant of the patent: **24.12.2025**
(21) Application number: 21886598.8
(22) Date of filing: 05.10.2021
(51) Int. Cl.: H01M 50/574, H01M 50/249, H01M 50/204, H01M 10/42, H01R 4/34

(54) **BATTERY MODULE, AND BATTERY PACK AND VEHICLE WHICH COMPRISE SAME**
BATTERIEMODUL SOWIE BATTERIEPACK UND FAHRZEUG DAMIT
MODULE DE BATTERIE ET BLOC-BATTERIE, ET VÉHICULE COMPRENANT CEUX-CI

(30) Priority: 29.10.2020 KR 20200141902
(43) Date of publication of application: 09.11.2022
(73) Proprietor: LG Energy Solution, Ltd., Seoul 07335 (KR)
(72) Inventor: SON, Do-Wung, Daejeon 34122 (KR); SHIN, Yong-Shik, Daejeon 34122 (KR); KIM, Young-Jin, Daejeon 34122 (KR); YUN, Seung-Hyun, Daejeon 34122 (KR); JUNG, Byeong-Yoon, Daejeon 34122 (KR); CHOI, Sung-Man, Daejeon 34122 (KR)
(74) Representative: Plasseraud IP
(86) International application number: PCT/KR2021/013639
(87) International publication number: WO 2022/092604

(56) References cited:
- JP-A- 2003 032 850
- JP-A- 2003 123 734
- JP-A- 2013 146 144
- JP-A- 2018 093 711
- JP-A- 2019 186 037
- JP-B2- 6 081 128
- US-A1- 2019 006 648

## Description

### TECHNICAL FIELD

The present application claims priority to Korean Patent Application No. 10-2020-0141902 filed on October 29, 2020 in the Republic of Korea.

The present disclosure relates to a battery module, a battery pack including the same and a vehicle including the battery module, and more particularly, to a battery module capable of easily coupling a relay to a bus bar, a battery pack including the same and a vehicle including the battery module.

### BACKGROUND ART

As technology development of and demand for mobile devices increase, the demand for secondary batteries as an energy source is rapidly increasing. Although nickel cadmium batteries or hydrogen ion batteries have been used as secondary batteries of the related art, because the batteries have almost no memory effect compared to nickel-based secondary batteries, recently, lithium secondary batteries that are freely charged and discharged, have very low self-discharge rate, and have high energy density have been widely used.

Such a lithium secondary battery mainly uses lithium-based oxides and carbon materials as positive electrode active materials and negative electrode active materials, respectively. The lithium secondary battery includes an electrode assembly in which a positive electrode plate and a negative electrode plate on which a positive electrode active material and a negative electrode active material are respectively coated are arranged with a separator interposed therebetween, and a sheath material, that is, a battery case, that seals and accommodates the assembly together with an electrolyte solution.

The lithium secondary battery includes a positive electrode, a negative electrode, a separator interposed therebetween, and an electrolyte, and includes a lithium ion battery (LIB), a polymer lithium ion battery (PLIB), etc. according to which positive electrode active material and negative electrode active material are used. In general, the electrodes of the lithium secondary batteries are formed by coating a positive electrode active material or a negative electrode active material on a current collector such as an aluminum or copper sheet, a mesh, a film, or a foil, and then drying the positive electrode active material or the negative electrode active material. In addition, various types of secondary batteries have a cover capable of protecting a plurality of battery cells, and include a plurality of battery modules in which the plurality of battery cells are stacked and drawn into the cover, and a battery pack including the plurality of battery modules.

The battery cells may be electrically connected to each other through a bus bar that is a conductor. In general, a positive electrode lead is manufactured of an aluminum material, a negative electrode lead is manufactured of a copper material, and the bus bar is also manufactured of a copper material.

Meanwhile, a relay selectively opening/closing a charging/discharging path through which current flows may be coupled to the battery module and connected to the bus bar.

However, one side of the bus bar is connected to the battery cells and the other side thereof is connected to the relay. Because a part of the bus bar connected to the battery cell is surrounded by a cover of the battery module and only a part of the bus bar connected to the relay partially protrudes toward an outside of the cover, there is a problem in that coupling of the relay and the bus bar is not easy because an operator's hand hits the cover in order to connect the relay to the bus bar.

Further prior art is described in JP 2019 186037 A and US 2019/006648 A1.

### DISCLOSURE

### Technical Problem

The present disclosure is designed to solve the problems of the related art, and therefore the present disclosure is directed to providing a battery module capable of easily coupling a relay to a bus bar, a battery pack including the same, and a vehicle including the battery module.

### Technical Solution

In one aspect of the present disclosure, there is provided a battery module including a battery cell stack in which a plurality of battery cells are stacked; a cover in which the battery cell stack is accommodated; and a bus bar electrically connecting the plurality of battery cells; a relay comprising connection terminals to be coupled to the bus bar; and a joint block coupled to the bus bar and the connection terminals of the relay, wherein first fastening holes are formed in the bus bar, second fastening holes are formed in the connection terminals of the relay, third fastening holes in which female screws are formed are formed in the joint block, and fastening bolts are inserted into the second fastening holes and the first fastening holes, and are fastened to the female screws of the third fastening holes, wherein the joint block includes a main body; seating grooves formed in the main body so that the bus bar and the connection terminals are seated, wherein guide portions are formed in the seating grooves so that the first fastening holes of the bus bar, the second fastening holes of the connection terminals of the relay, and the third fastening holes are aligned, wherein the guide portions are provided as inclined guides in which inclinations are formed along the circumferences of the seating grooves, and wherein the inclined guides are formed such that the bus bar and the connection terminals descend toward the third fastening holes along the inclined guides.

The fastening bolts may be inserted and fixed in order of the second fastening holes, the first fastening holes, and the third fastening holes.

In another aspect of the present disclosure, there is provided a battery pack including the battery module described above and a vehicle including the battery module.

### Advantageous Effects

The embodiments of the present disclosure may easily couple a relay to a bus bar through a joint block.

### DESCRIPTION OF DRAWINGS

FIG. 1 is a schematic overall perspective view of a battery module according to an embodiment of the present disclosure.
FIG. 2 illustrates a part of a bus bar in the battery module according to an embodiment of the present disclosure.
FIG. 3 is a perspective view illustrating a state in which a relay and a bus bar are coupled by a joint block not covered by the scope of the present claims.
FIG. 4 is a perspective view illustrating a state in which a relay and a bus bar are coupled by a joint block in FIG. 3.
FIG. 5 is a perspective view illustrating a state in which a relay and a bus bar are coupled by a joint block according to an embodiment of the present disclosure.
FIG. 6 is a perspective view illustrating a state in which a relay and a bus bar are coupled by a joint block in FIG. 5.
FIG. 7 is a perspective view of a state in which a guide portion is formed in a joint block according to another embodiment of FIG. 5.
FIGS. 8 to 10 illustrate a process of guiding and fastening a relay and a bus bar along the guide portion of the joint block of FIG. 7.

### MODE OF DISCLOSURE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation. Therefore, the description proposed herein is just a preferable example for the purpose of illustrations only, not intended to limit the scope of the disclosure, so it should be understood that other equivalents and modifications could be made thereto without departing from the scope of the disclosure.

In the drawings, the size of each element or a specific portion constituting the element is exaggerated, omitted, or schematically illustrated for convenience and clarity of description. Accordingly, the size of each element does not fully reflect the actual size. If it is determined that a detailed description of a related known function or configuration may unnecessarily obscure the gist of the present disclosure, such description will be omitted.

As used herein, the term 'couple' or 'connect' includes not only a case where one member is directly coupled or directly connected to another member, but also a case where one member is indirectly coupled or indirectly connected to another member through a joint member.

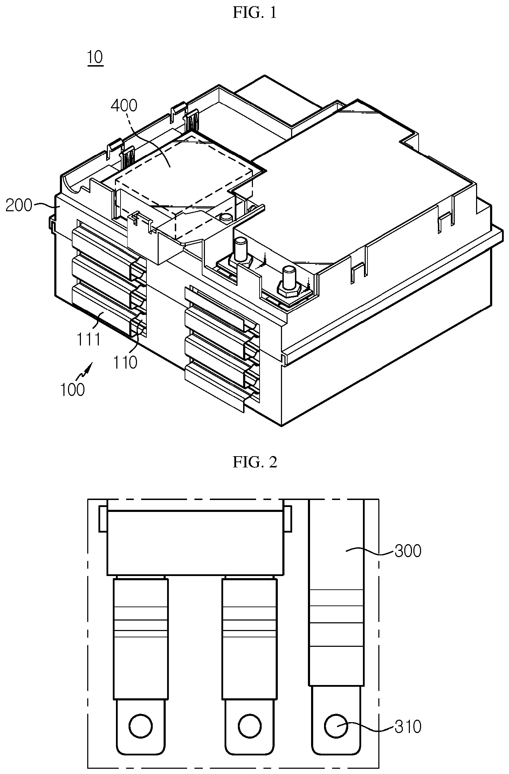

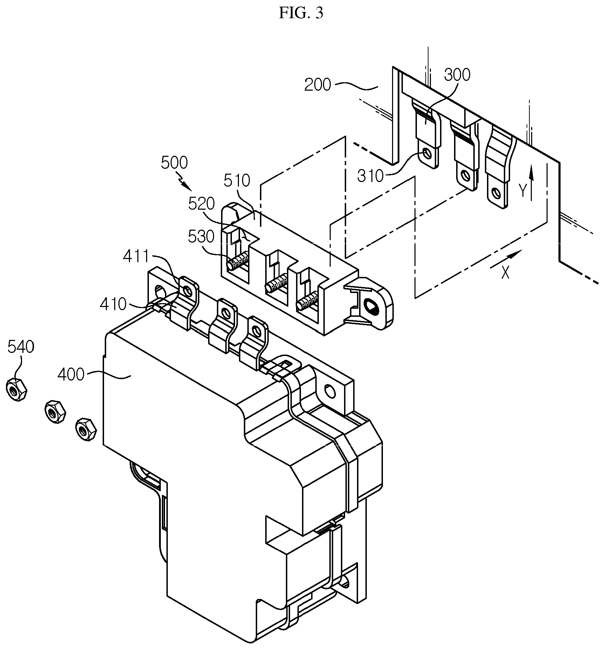

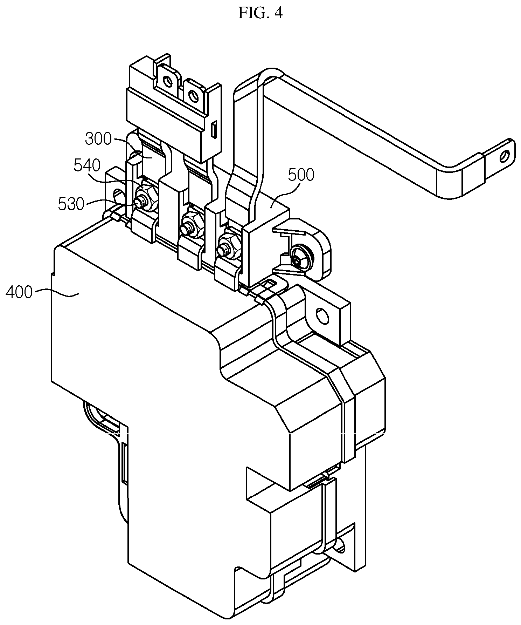

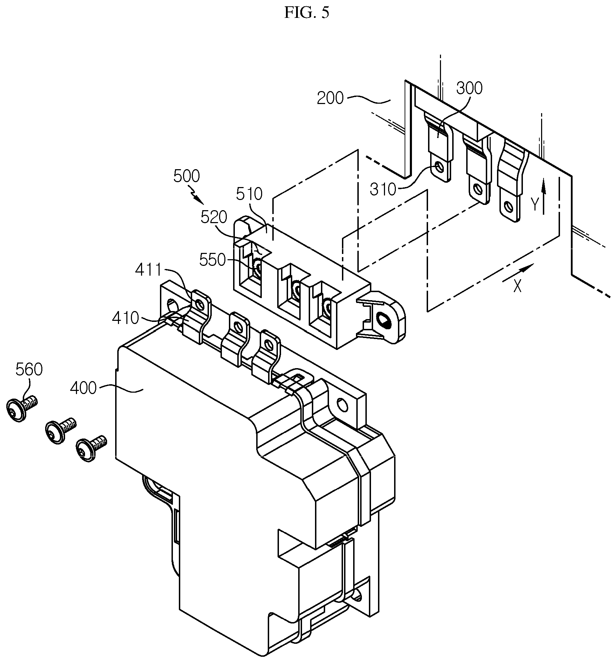

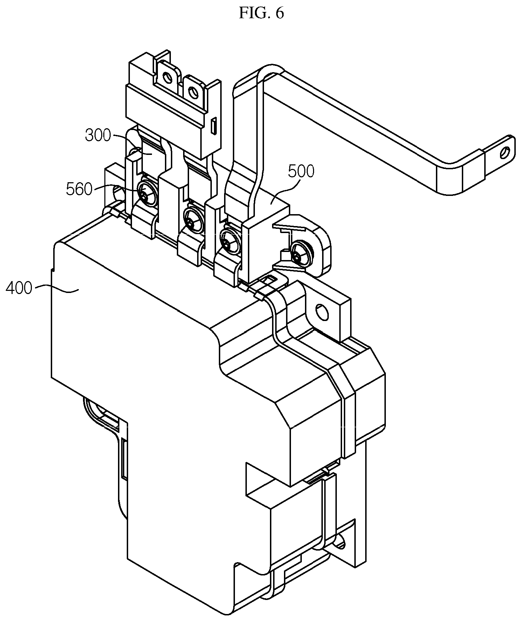

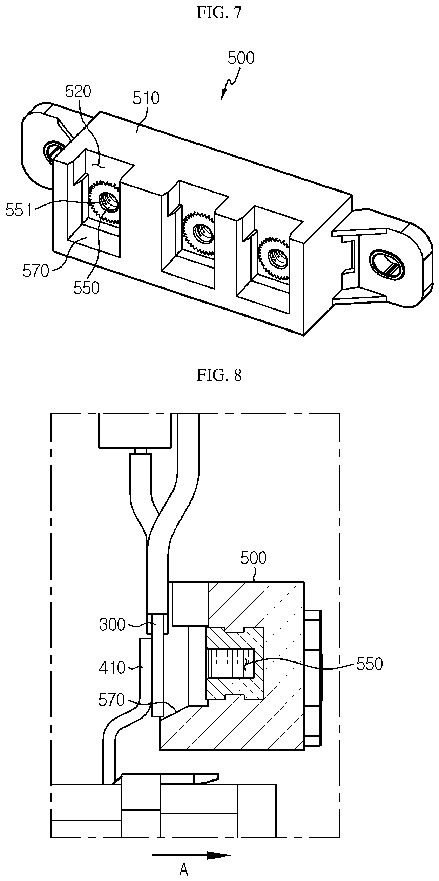

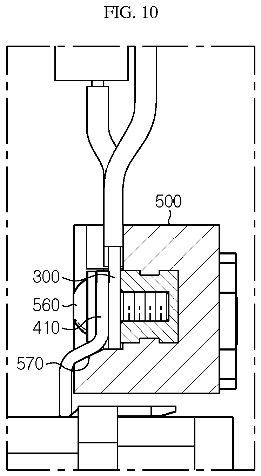

FIG. 1 is a schematic overall perspective view of a battery module according to an embodiment of the present disclosure, FIG. 2 illustrates a part of a bus bar in the battery module according to an embodiment of the present disclosure, FIG. 3 is a perspective view illustrating a state in which a relay and a bus bar are coupled by a joint block according to an embodiment in the battery module according to an embodiment of the present disclosure, FIG. 4 is a perspective view illustrating a state in which a relay and a bus bar are coupled by a joint block in FIG. 3, FIG. 5 is a perspective view illustrating a state in which a relay and a bus bar are coupled by a joint block according to an embodiment of the present disclosure, FIG. 6 is a perspective view illustrating a state in which a relay and a bus bar are coupled by a joint block in FIG. 5, FIG. 7 is a perspective view of a state in which a guide portion is formed in a joint block according to another embodiment of FIG. 5, and FIGS. 8 to 10 illustrate a process of guiding and fastening a relay and a bus bar along the guide portion of the joint block of FIG. 7. In FIGS. 4 and 6, a cover is omitted.

Referring to the drawings, a battery module 10 according to an embodiment of the present disclosure includes a battery cell stack 100, a cover 200, a bus bar 300, a relay 400, and a joint block 500.

Referring to FIG. 1, a plurality of battery cells 110 in which electrode leads 111 are provided are stacked in the battery cell stack 100. The electrode leads 111 provided in the battery cell 110 are a kind of terminal exposed to the outside and are connected to an external device, and use a conductive material.

The electrode leads 111 include a positive electrode lead and a negative electrode lead. The positive electrode lead and the negative electrode lead may be disposed in opposite directions with respect to the longitudinal direction of the battery cell 110, or the positive electrode lead and the negative electrode lead may be located in the same direction with respect to the longitudinal direction of the battery cell 110.

The positive electrode lead and the negative electrode lead may be made of various materials. For example, the positive electrode lead may be manufactured of an aluminum material, and the negative electrode lead may be manufactured of a copper material.

The electrode leads 111 are electrically coupled to the bus bar 300. The battery cell 110 may have a structure in which a plurality of unit cells or a plurality of bi-cells are stacked according to the capacity, wherein positive electrode plate-separator-negative electrode plate are sequentially arranged in a unit cell, and positive electrode plate-separator-negative electrode plate-separator-positive electrode plate-separator-negative electrode plate are sequentially arranged in a bi-cell.

The battery cell stack 100 is configured such that the plurality of battery cells 110 are stacked on each other. Here, the battery cells 110 may have various structures, and the plurality of battery cells 110 may be stacked in various ways.

A plurality of cartridges (not shown) respectively accommodating the battery cells 110 may be provided on the battery cell stack 100. Each cartridge (not shown) may be manufactured by injection molding of plastic, and the plurality of cartridges (not shown) in which an accommodating unit capable of accommodating the battery cell 110 is formed may be stacked.

A connector element or a terminal element may be provided on a cartridge assembly in which the plurality of cartridges (not shown) are stacked. The connector element may include, for example, various types of electrical connection components or connection members for connection to a battery management system (BMS, not shown) capable of providing data on the voltage or temperature of the battery cell 110, etc.

In addition, the terminal element includes a positive electrode terminal and a negative electrode terminal as a main terminal connected to the battery cell 110, and a terminal bolt is provided on the terminal element to be electrically connected to the outside. Meanwhile, the battery cell 110 may have various shapes.

Referring to FIG. 1, the battery cell stack 100 or a cartridge assembly in which the battery cell stack 100 is accommodated is accommodated in the cover 200. For example, the cover 200 may be provided to surround the battery cell stack 100.

The relay 400 is disposed on the cover 200, and the relay 400 is coupled to the bus bar 300 connected to the battery cells 110.

The cover 200 surrounds the battery cell stack 100 or all of a plurality of cartridge assemblies, thereby protecting the battery cell stack 100 or the cartridge assemblies from external vibration or impact.

The cover 200 may be formed in a shape corresponding to the shape of the battery cell stack 100 or the cartridge assembly. For example, when the battery cell stack 100 or the cartridge assembly is provided in a hexahedral shape, the cover 200 may also be provided in the hexahedral shape to correspond thereto.

The cover 200 may be manufactured by, for example, bending a plate of a metal material, or may be manufactured by plastic injection mold. Also, the cover 200 may be manufactured integrally or may be manufactured separately.

A penetration unit (not shown) through which the connector element or the terminal element described above may be exposed to the outside may be formed in the cover 200. That is, the connector element or the terminal element may be electrically connected to a predetermined external component or member, and the penetration unit may be formed in the cover 200 so that the electrical connection is not obstructed by the cover 200.

The bus bar 300 is coupled to the electrode leads 111 provided in each of the plurality of battery cells 110, and electrically connects the respective electrode leads 111 to each other. In FIGS. 3 and 5, a part of the bus bar 300 connected to the battery cells 110 accommodated inside the cover 200 is exposed to the outside of the cover 200. Here, the bus bar 300 is manufactured of a flexible material that is bendable.

Referring to FIGS. 2, 3 and 5, first fastening holes 310 are formed in the bus bar 300. The first fastening holes 310 of the bus bar 300 are fastened after being centered with second fastening holes 411 formed in connection terminals 410 of the relay 400 to be described below.

The relay 400 is connected to the battery cells 110 through the bus bar 300 and switches the flow of current in the battery cells 110. Connection terminals 410 are provided in the relay 400. In addition, the second fastening holes 411 are formed in the connection terminals 410 of the relay 400, and the relay 400 may be coupled to the bus bar 300 through the second fastening holes 411 formed in the connection terminals 410 of the relay 400.

Here, the battery cell stack 100 is accommodated in the cover 200 and connected to the bus bar 300, and the bus bar 300 is provided to be coupled with the relay 400 in a state where a part of the bus bar 300 protrudes to the outside of the cover 200.

The joint block 500 is coupled to the connection terminals 410 of the bus bar 300 and the relay 400. Here, the bus bar 300 and the relay 400 are coupled by the joint block 500. That is, referring to FIGS. 3 and 5, when the bus bar 300 and the connection terminals 410 of the relay 400 are directly fastened through bolts and nuts, because if an operator's hand hits the cover 200, the work is not easy. In order to solve this problem, the battery module 10 according to an embodiment of the present disclosure includes the joint block 500.

Referring to FIG. 3 showing a battery module not covered by the scope of the present claims, the joint block 500 may include a main body 510, seating grooves 520, and protruding bolts 530.

The seating grooves 520 and the protruding bolts 530 are formed in the main body 510.

The seating grooves 520 may be formed in the body 510 so that the bus bar 300 and the connection terminals 410 of the relay 400 are seated. Referring to FIG. 3, three seating grooves 520 are formed in the main body 510, but this is only an example and the number of seating grooves 520 is not limited thereto.

The protruding bolts 530 are formed in the main body 510, and nuts 540 are coupled thereto.

As an embodiment, referring to FIG. 5, the joint block 500 includes the main body 510, the seating grooves 520, and a third fastening holes 550.

The seating grooves 520 and the third fastening holes 550 are formed in the main body 510.

The seating grooves 520 may be formed in the main body 510 so that the bus bar 300 and the connection terminals 410 are seated. Referring to FIG. 5, three seating grooves 520 are formed in the main body 510, but this is only an example and the number of seating grooves 520 is not limited thereto.

In addition, the third fastening holes 550 are formed inside the seating grooves 520, and female screws 551 (see FIG. 7) are formed in the third fastening holes 550. Here, FIGS. 5 and 7 differ only in whether guide portions 570 are formed in the seating grooves 520, and in both FIGS. 5 and 7, the female screws 551 are formed in the third fastening holes 550.

As another embodiment, referring to FIG. 7, the guide portions 570 may be formed in the seating grooves 520.

Referring to FIG. 3, the protruding bolts 530 are integrally formed with the joint block 500 according to an embodiment. The joint block 500 is first moved in the X direction of FIG. 3 and then moved in the Y direction of FIG. 3 under the bus bar 300 so that the protruding bolts 530 formed in the joint block 500 are moved from the rear of the first fastening holes 310 of the bus bar 300 to the front, that is, in a direction opposite to the X direction of FIG. 3, and are inserted into the first fastening holes 310.

Then, the second fastening holes 411 formed in the connection terminals 410 of the relay 400 are inserted into the protruding bolts 530 of the joint block 500 inserted into the first fastening holes 310 and protruding toward the outside of the first fastening holes 310, and as shown in FIG. 4, the nuts 540 are fastened to the protruding bolts 530 so that the bus bar 300, the joint block 500, and the relay 400 may be coupled. As described above, the cover 200 is omitted in FIG. 4.

Referring to FIG. 5, the third fastening holes 550 in which female screws 551 (see FIG. 7) are formed are formed in the joint block 500 according to an embodiment different from FIG. 3. The joint block 500 is first moved in the X direction of FIG. 5 and then moved in the Y direction of FIG. 5 under the bus bar 300 so that the third fastening holes 550 formed in the joint block 500 are aligned to be centered while being located in the rear of the first fastening holes 310 of the bus bar 300.

Then, the second fastening holes 411 formed in the connection terminals 410 of the relay 400 are aligned to be centered with the first fastening holes 310 and the third fastening holes 550, and, as shown in FIG. 6, the fastening bolts 560 are inserted into the second fastening holes 411 and the first fastening holes 310, are fastened to the female screws 551 of the third fastening holes 550, so that the bus bar 300 and the joint block 500 and the relay 400 may be coupled. As described above, the cover is omitted in FIG. 6.

Here, referring to FIGS. 5 and 6, the fastening bolts 560 are inserted and fixed in the order of the second fastening holes 411, the first fastening holes 310, and the third fastening holes 550.

Referring to FIG. 7, the guide portions 570 are formed in the seating grooves 520. Here, the guide portions 570 are provided as inclined guides in which inclinations are formed along the circumferences of the seating grooves 520. That is, the inclined guides are formed such that the bus bar 300 and the connection terminals 410 descend toward the third fastening holes 550 along the inclined guides.

Accordingly, there is an effect that the relay 400 may be easily coupled to the bus bar 300 through the joint block 500.

Hereinafter, the operation and effect of the battery module 10 according to an embodiment of the present disclosure will be described with reference to the drawings.

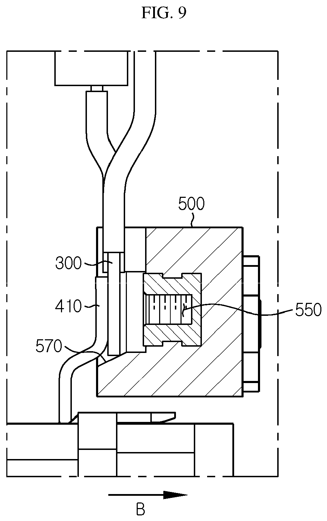

Referring to FIG. 8, the connection terminals 410 of the relay 400 are in contact with the bus bar 300 and move in the direction of an arrow A. At this time, referring to FIG. 9, the connection terminals 410 of the relay 400 and the bus bar 300 move in a direction of an arrow B while being in contact with each other and descend toward the third fastening holes 550 along the inclined guides of the guide portions 570 formed in the seating grooves 520 of the joint block 500.

That is, when the connection terminals 410 of the relay 400 and the bus bar 300 are in contact with each other and only move in the direction of the arrow A of FIG. 8, the connection terminals 410 of the relay 400 and the bus bar 300 move to the third fastening holes 550, and the second fastening holes 411 of the connection terminals 410 of the relay 400, the first fastening holes 310 of the bus bar 300, and the third fastening holes 550 of the joint block 500 are aligned to be precisely centered with each other without any alignment.

That is, in the battery module 10 according to an embodiment of the present disclosure, it is possible to align the first fastening holes 310, the second fastening holes 411, and the third fastening holes 550 without a special aligning operation, and accordingly, the first fastening holes 310, the second fastening holes 411, and the third fastening holes 550 may be fastened with the fastening bolts 560, and thus there is an effect that the relay 400 may be easily coupled to the bus bar 300 through the joint block 500.

Meanwhile, a battery pack (not shown) according to an embodiment of the present disclosure may include one or more battery modules 10 according to an embodiment of the present disclosure as described above. In addition, the battery pack (not shown) may further include a case accommodating the battery module 10, and various devices controlling the charging and discharging of the battery module 10, such as a BMS, a current sensor, a fuse, etc., in addition to the battery module 10.

Meanwhile, a vehicle (not shown) according to an embodiment of the present disclosure may include the battery module 10 or the battery pack (not shown) described above. The battery pack (not shown) may include the battery module 10. In addition, the battery module 10 according to an embodiment of the present disclosure may be applied to a vehicle (not shown), for example, a predetermined vehicle (not shown) provided to use electricity such as an electric vehicle or a hybrid vehicle.

The present disclosure has been described in detail. However, it should be understood that the detailed description and specific examples, while indicating preferred embodiments of the disclosure, are given by way of illustration only, since various changes and modifications within the scope of the disclosure will become apparent to those skilled in the art from this detailed description.

## Claims

1. A battery module (10) comprising:
a battery cell stack (100) in which a plurality of battery cells (110) are stacked;
a cover (200) in which the battery cell stack (100) is accommodated;
a bus bar (300) electrically connecting the plurality of battery cells (110);
a relay (400) comprising connection terminals (410) to be coupled to the bus bar (300); and
a joint block (500) coupled to the bus bar (300) and the connection terminals (410) of the relay (400),
wherein first fastening holes (310) are formed in the bus bar (300),
second fastening holes (411) are formed in the connection terminals (410) of the relay (400),
third fastening holes (550) in which female screws (551) are formed are formed in the joint block (500), and
fastening bolts (560) are inserted into the second fastening holes (411) and the first fastening holes (310), and are fastened to the female screws (551) of the third fastening holes (550),
wherein the joint block (500) comprises:
a main body (510);
seating grooves (520) formed in the main body (510) so that the bus bar (300) and the connection terminals (410) are seated,
**characterized in that** guide portions (570) are formed in the seating grooves (520) so that the first fastening holes (310) of the bus bar (300), the second fastening holes (411) of the connection terminals (410) of the relay (400), and the third fastening holes (550) are aligned,
wherein the guide portions (570) are provided as inclined guides in which inclinations are formed along the circumferences of the seating grooves (520), and
wherein the inclined guides (570) are formed such that the bus bar (300) and the connection terminals (410) descend toward the third fastening holes (550) along the inclined guides (570).

2. The battery module (10) of claim 1, wherein the fastening bolts (560) are inserted and fixed in order of the second fastening holes (411), the first fastening holes (310), and the third fastening holes (550).

3. A battery pack comprising: at least one battery module (10) according to claim 1 or claim 2.

4. A vehicle comprising at least one battery module (10) according to claim 1 or claim 2.

## Patentansprüche

1. Batteriemodul (10), umfassend:
einen Batteriezellen-Stapel (100), in welchem eine Mehrzahl von Batteriezellen (110) gestapelt sind;
eine Abdeckung (200), in welcher der Batteriezellen-Stapel (100) aufgenommen ist;
eine Sammelschiene (300), welche die Mehrzahl von Batteriezellen (110) elektrisch verbindet;
ein Relais (400), welches Verbindungsanschlüsse (410) umfasst, welche mit der Sammelschiene (300) zu koppeln sind; und
einen Kopplungsblock (500), welcher mit der Sammelschiene (300) und den Verbindungsanschlüssen (410) des Relais (400) gekoppelt ist,
wobei erste Befestigungslöcher (310) in der Sammelschiene (300) gebildet sind, zweite Befestigungslöcher (411) in den Verbindungsanschlüssen (410) des Relais (400) gebildet sind,
dritte Befestigungslöcher (550), in welchen weibliche Schrauben (551) gebildet sind, in dem Kopplungsblock (500) gebildet sind, und
Befestigungsbolzen (560) in die zweiten Befestigungslöcher (411) und die ersten Befestigungslöcher (310) eingesetzt sind und an den weiblichen Schrauben (551) der dritten Befestigungslöcher (550) befestigt sind,
wobei der Kopplungsblock (500) umfasst:
einen Hauptkörper (510);
Sitznuten (520), welche in dem Hauptkörper (510) gebildet sind, so dass die Sammelschiene (300) und die Verbindungsanschlüsse (410) einsitzen,
**dadurch gekennzeichnet, dass** Führungsabschnitte (570) in den Sitznuten (520) gebildet sind, so dass die ersten Befestigungslöcher (310) der Sammelschiene (300), die zweiten Befestigungslöcher (411) der Verbindungsanschlüsse (410) des Relais (400) und die dritten Befestigungslöcher (550) ausgerichtet sind,
wobei die Führungsabschnitte (570) als geneigte Führungen bereitgestellt sind, in welchen Neigungen entlang der Umfänge der Sitznuten (520) gebildet sind, und
wobei die geneigten Führungen (570) derart gebildet sind, dass die Sammelschiene (300) und die Verbindungsanschlüsse (410) in Richtung der dritten Befestigungslöcher (550) entlang der geneigten Führungen (570) absteigen.

2. Batteriemodul (10) nach Anspruch 1, wobei die Befestigungslöcher (560) in Reihenfolge der zweiten Befestigungslöcher (411), der ersten Befestigungslöcher (310) und der dritten Befestigungslöcher (550) eingesetzt und fixiert sind.

3. Batteriepack, umfassend: wenigstens ein Batteriemodul (10) nach Anspruch 1 oder Anspruch 2.

4. Fahrzeug, umfassend wenigstens ein Batteriemodul (10) nach Anspruch 1 oder 2.

## Revendications

1. Module de batterie (10) comprenant :
un empilement (100) d'éléments de batterie dans lequel une pluralité d'éléments de batterie (110) sont empilés ;
un cache (200) dans lequel l'empilement (100) d'éléments de batterie est reçu ;
une barre omnibus (300) connectant électriquement la pluralité d'éléments de batterie (110) ;
un relais (400) comprenant des bornes de connexion (410) à coupler à la barre omnibus (300) ; et
un bloc de jonction (500) couplé à la barre omnibus (300) et aux bornes de connexion (410) du relais (400),
dans lequel des premiers trous de fixation (310) sont formés dans la barre omnibus (300),
des deuxièmes trous de fixation (411) sont formés dans les bornes de connexion (410) du relais (400),
des troisièmes trous de fixation (550), dans lesquels des vis femelles (551) sont formées, sont formés dans le bloc de jonction (500), et
des boulons de fixation (560) sont insérés dans les deuxièmes trous de fixation (411) et les premiers trous de fixation (310), et sont fixés aux vis femelles (551) des troisièmes trous de fixation (550),
dans lequel le bloc de jonction (500) comprend :
un corps principal (510) ;
des rainures de positionnement (520) formées dans le corps principal (510) afin de positionner la barre omnibus (300) et les bornes de connexion (410),
**caractérisé en ce que** des parties de guidage (570) sont formées dans les rainures de positionnement (520) de manière à ce que les premiers trous de fixation (310) de la barre omnibus (300), les deuxièmes trous de fixation (411) des bornes de connexion (410) du relais (400) et les troisièmes trous de fixation (550) soient alignés,
dans lequel les parties de guidage (570) se présentent sous forme de guides inclinés dans lesquels des inclinaisons sont formées le long des circonférences des rainures de positionnement (520), et
dans lequel les guides inclinés (570) sont formés de manière à ce que la barre omnibus (300) et les bornes de connexion (410) descendent vers les troisièmes trous de fixation (550) le long des guides inclinés (570).

2. Module de batterie (10) selon la revendication 1, dans lequel les boulons de fixation (560) sont insérés et fixés dans l'ordre des deuxièmes trous de fixation (411), des premiers trous de fixation (310) et des troisièmes trous de fixation (550).

3. Bloc-batterie comprenant : au moins un module de batterie (10) selon la revendication 1 ou la revendication 2.

4. Véhicule, comprenant au moins un bloc-batterie (10) selon la revendication 1 ou la revendication 2.
